Europäisches Patentamt

(19) European Patent Office

Office européen des brevets

(11) Publication number: **0 026 633**
**B1**

(12) **EUROPEAN PATENT SPECIFICATION**

(45) Date of publication of patent specification: **11.04.84**  (51) Int. Cl.³: **F 04 B 27/02, F 16 F 15/26**

(21) Application number: **80303341.4**

(22) Date of filing: **24.09.80**

(54) Opposed piston machinery.

(30) Priority: **26.09.79 GB 7933308**

(43) Date of publication of application:
**08.04.81 Bulletin 81/14**

(45) Publication of the grant of the patent:
**11.04.84 Bulletin 84/15**

(84) Designated Contracting States:
**AT DE FR GB SE**

(56) References cited:
**DE - A - 1 453 547**
**DE - A - 2 454 956**
**DE - C - 322 817**
**FR - A - 555 115**
**FR - A - 780 440**
**FR - E - 28 763**
**US - A - 1 450 032**
**US - A - 1 747 457**
**US - A - 1 791 672**
**US - A - 2 759 665**

(73) Proprietor: **HAMWORTHY ENGINEERING LIMITED**
**Fleets Corner**
**Poole Dorset BH17 7LA (GB)**

(72) Inventor: **Atkins, John Edwin Lawrence**
**47, Branksea Avenue Hamworthy**
**Poole Dorset BH15 4DP (GB)**

(74) Representative: **Lawson, David Glynne et al,**
**MARKS & CLERK 57-60 Lincoln's Inn Fields**
**London WC2A 3LS (GB)**

The present invention relates to opposed reciprocating piston machinery, and has particular but not exclusive reference to air compressors.

Opposed piston reciprocating machinery has been used in diesel, petrol, steam and gas engines with the cylinders arranged in a horizontal plane. Usually the opposed pistons are separately connected to a central crankshaft by their own connecting rods.

It is also known that a certain type of very small compressor, for example a refrigeration compressor, has a sliding or slipper block which converts rotary to reciprocating motion. Another type of compressor works by having a cam/eccentric shaft, whereby opposed pistons are in one piece with, for example, a structure of legs. In this case, the balance weights are external to the legs and the reciprocating piston. This prevents the main bearings from being in close proximity to the crank and point of high load.

US—A—1747457 describes a reciprocating compressor with a pair of opposed pistons which reciprocate in opposed cylinders. The pistons form opposite end parts of a unitary structure, being interconnected by four spaced parallel limbs. One of the pistons is connected by a connecting rod to a central crank drive of which the shaft extends through openings defined between the interconnecting limbs. This compressor has no balance weights and is therefore suitable for only light duty. The unitary piston structure can be removed as a unit but, because it is unitary, maintenance or other attention to the pistons involves substantially dismantling the compressor and removal of the crank drive. Maintenance is therefore difficult.

DE—C—322817 describes a machine with a pair of opposed pistons moving in opposed cylinders, the pistons being interconnected by a pair of curved members between which is a central transverse opening. A crankshaft extends through this opening but only the crank pin is within the curved members. The crank pin has a connecting rod which is connected to one of the pistons and to the adjacent ends of the curved members in a complicated arrangement using additional rings to hold together the adjacent ends of the two curved members and to retain a gudgeon pin. Because there are no balance weights and the crank webs are outside the curved connecting members, this machine is suitable only for light duty. The very complicated connection between the crank drive, the connecting members and the pistons makes it impossible to change a piston without disturbing the drive: to change a piston it is necessary to remove the additional retaining ring and also the gudgeon pin, and the yoke formed by the curved connecting members will then fall apart. Maintenance and assembly of this machine are therefore difficult.

DE—A—2454956 describes a multistage high-pressure compressor with opposed piston groups in which individual piston sections are of different diameters, and a central common drive consisting of a crankshaft with balance weights, connected by a slipper block to a flat plate which in turn is attached to the respective piston groups. Such an arrangement does not have enough rigidity or positive guidance for use at industrial high speeds or power levels, and for servicing it is necessary to dismantle the compressor casing and cylinders.

According to the present invention, there is provided a reciprocatory machine comprising a pair of opposed pistons rigidly connected to one another by a yoke and mounted so as to reciprocate in respective cylinders, and a crank drive connected to the yoke, and in which

the yoke is an open frame structure with four generally parallel limbs perpendicular to the axis of the crank drive shaft and two ends, defining axially spaced openings through which extends the shaft of the crank drive, and two further openings at right angles to the axially spaced openings; each piston is guided only by the respective cylinder; the crank drive comprises the crankshaft, a connecting rod, and a pin which couples the connecting rod to the yoke and piston assembly; the crank webs of the crankshaft being housed inside the yoke and accommodated by the aforesaid further openings in the yoke; and the crankshaft has bearings at both ends, characterised in that each piston is fastened only to the adjacent end of the yoke and can be detached from the yoke; and the gudgeon pin connects the connecting rod only to the yoke, whereby both pistons can be detached from the yoke without disturbing the crank drive, and the crank drive includes a balance weight on each side of the connecting rod housed inside the yoke and accommodated by the aforesaid further openings in the yoke.

In the present invention, the arrangement of the connections between the crank drive, the yoke and the pistons facilitates manufacture and maintenance, by enabling the pistons and cylinders to be removed or installed, completely independently of the crank drive. To remove a piston it is only necessary to remove its cylinder head and to unfasten the piston from the yoke, without disturbing any other part of the machine, because, in contrast to prior designs, the connecting rod is connected only to the yoke, and the pistons are also connected only to the yoke, with no direct connection between the pistons and the connecting rod. Furthermore the present invention, with balance weights inside a compact yoke, enables the crankshaft bearings to be placed close to the crank pin, where the load is greatest.

The invention will now be described by way of example with reference to the accompanying drawings, in which:

Figure 1 is a longitudinal section of a compressor having a pair of opposed reciprocating pistons according to the invention;

Figure 2 is a plan view of the compressor as shown in Figure 1;

Figure 3 is a side elevation of the yoke shown in Figure 1;

Figure 4 is an end view of the yoke shown in Figure 3, looking in the direction A;

Figure 5 is an end view of the yoke shown in Figure 3, looking in the direction B, and

Figure 6 is a section taken through the end of the yoke shown in Figure 3.

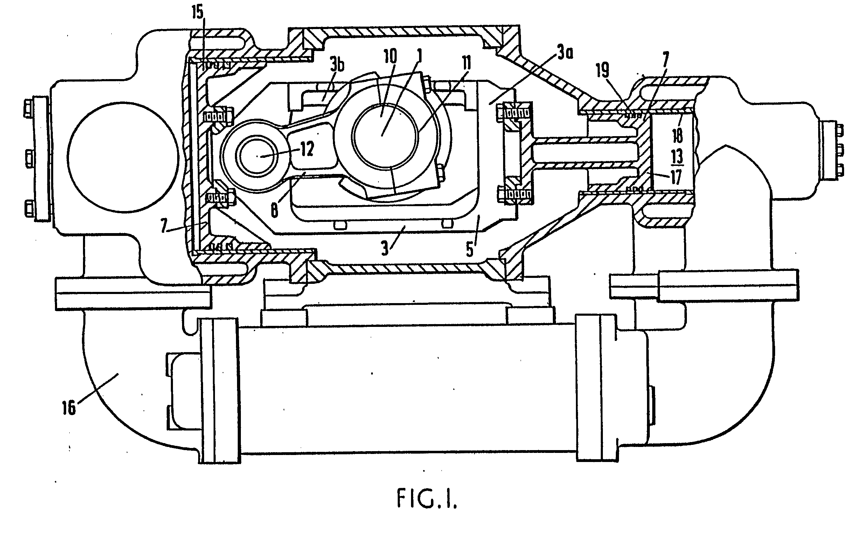

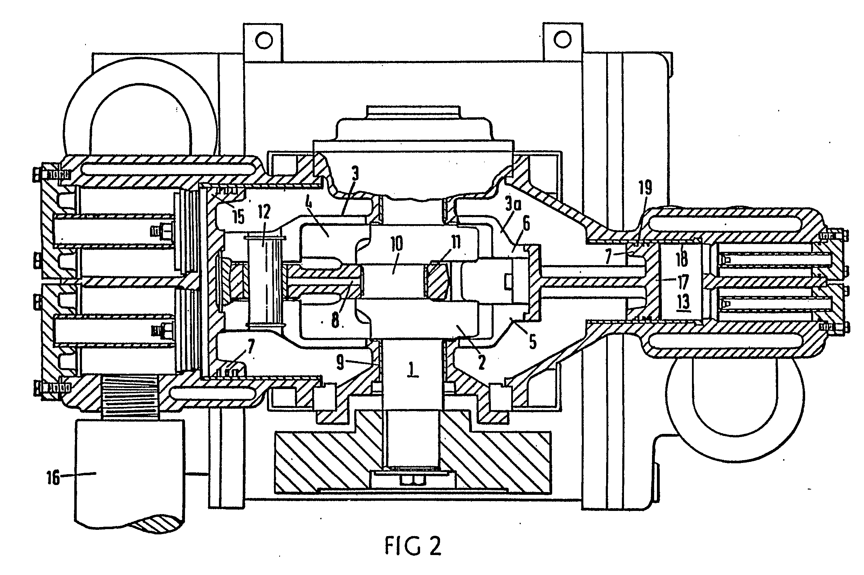

Figures 1 and 2 show a compressor having a crankshaft 1 incorporating balance weights 2 on webs or cranks. The crankshaft 1 passes through a yoke 3, which is substantially rectangular-shaped in elevation. The yoke 3 has a central recess 4 between two substantially parallel sides 5 and 6. The two sides 5 and 6 are joined at each end of the yoke, where the two pistons 7 are separably attached to the yoke. The yoke is arranged around the crankshaft 1. The central recess 4 permits free movement of the crankshaft 1, balance weights 2, and the connecting rod 8 within the yoke.

The crankshaft is a conventional driveshaft, which has journals rotating in and supported by main bearings 9. The yoke 3 permits the main bearings to be in close proximity to the balance weights 2 accommodated within the yoke. The main bearings are closer together than if the balance weights were outside the yoke, and this arrangement helps to reduce the out of balance forces. The conversion of rotary motion of the crankshaft 1 to reciprocating motion of the pair of pistons 7 is via a single connecting rod 8, with a conventional horizontally or obliquely split big-end. The big-end is connected to the crankshaft 1 in the conventional manner. The crankshaft has a crank pin 10 which rotates in the big-end bearing 11 of a connecting rod 8.

A pair of opposed pistons 7 are rigidly connected to one another by the yoke 3. Each piston is accurately spigot located and secured at an end of the yoke. The yoke comprises an integral sub-assembly 3a having two separable bridge pieces 3b. Thus, the pistons are mounted in a rigid structure. The small end of the connecting rod 8 is pivotally connected by a gudgeon pin 12 to the yoke 3. The connecting rod 8 is accommodated within the central recess 4 of the yoke, and is substantially parallel to the bridge pieces 3b of the yoke. The gudgeon pin 12 is arranged perpendicularly to the connecting rod, and is located in the yoke by, for example, circlips. Thus, the rigid assembly of the yoke and the two pistons is driven by one connecting rod.

The pistons may be of various designs or style, depending on their application. The need for piston skirts is eliminated as each piston acts as a guide/cross-head for the other piston whilst moving within the opposed cylinders 13.

It may be desirable to provide a certain amount of piston skirt; in the form of a 'slipper' in order to accommodate connecting rod thrust.

The crankshaft 1 is driven by a conventional prime mover, for example electric motor, internal combustion engine, steam or gas engines. The crankshaft drives the yoke 3 via the connecting rod 8. The embodiment shown in Figures 1 and 2 has a low pressure piston 15 which feeds air via a conduit 16 to a high pressure piston 17. Thus, the two opposed reciprocating pistons can be used to compress, for example, air.

The piston rubbing surfaces are reduced, which results in power saving and the removal of the risk of scuffing. Because of improved piston guide to diameter ratio, piston oscillation will be reduced and piston ring location and movement maintained more precisely, thus improving the life and performance of these components. Lubrication to the cylinder walls 18 from the crank case is direct to the piston ring support area 19 where oil control is more readily achieved.

The pistons 7 are separably attached to the yoke by, for example bolts. This means that the pistons can be removed for examination or renewal without splitting the connecting rod 8. The connecting rod is accommodated within the yoke 3. It is possible to achieve access to the connecting rod via the central recess 4. It is therefore possible to remove the connecting rod for examination or replacement of bearings if required, without disturbing the crankshaft or removing the yoke from the crank case.

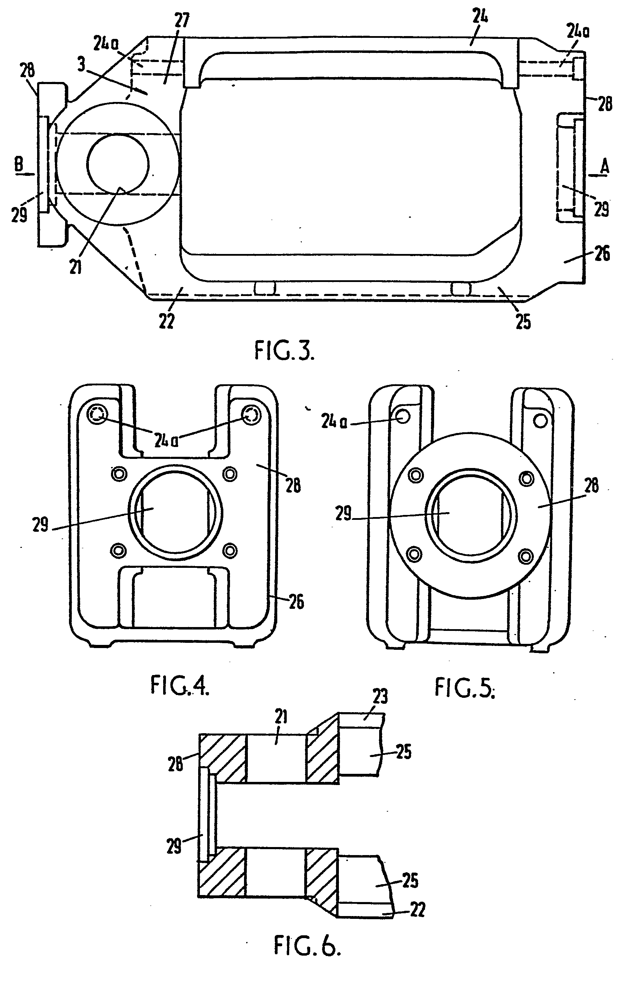

Figures 3 to 6 illustrate the construction of the yoke 3. The yoke 3 incorporates the gudgeon pin bore 21. The yoke comprises two sides 22 and 23. Each side is substantially U-shaped in elevation, having two limbs 24 and 25 which are substantially parallel and coplanar to each other. At one end of the yoke 3, the two sides are integral with an end piece 26. At the opposite end of the end piece 26, there is a connecting portion 27 which is also integral with the two sides 22 and 23. The limb or bridge piece 24 of the sides 22 and 23 is separably attached to the end piece 26 and the connecting portion 27. The limb 24 is secured to the end piece 26 and the connecting portion 27 by bolts 24a. The connecting portion 27 incorporates the gudgeon pin bore 21. The end faces 28 of the yoke 3 and the end piece 26 have a recess or socket 29 to locate the pistons. The pistons are secured to the end faces 28 by, for example, bolts. It is to be understood that instead of having a recess or socket 29, each end face 28 can be spigoted to locate the pistons. Figure 4 is an end view of the end piece 26 looking in the direction A in Figure 3. Figure 5 is an end view of the yoke looking in the direction B in Figure 3.

Further embodiments of the yoke 3 include a sub-assembly split along the horizontal centre line into two similar halves; and a sub-assembly split along the vertical plane at the opposite end of the yoke to the gudgeon pin bore. In this latter embodiment, the end piece 26 is separably attached to the yoke, and secured to the sides 22 and 23 by, for example bolts.

The shape of the yoke shown in Figures 3 to 6 is the result of detailed stress analysis, and has been determined to use the minimum amount of metal required to carry the operating stresses.

It is an advantage of the present invention that an "over square" arrangement can be made, which can permit higher rotational speeds and can reduce piston speeds and inertia forces.

It is a further advantage of the invention that each piston can function as a guide or crosshead for the other piston, because each piston is rigidly connected to the other piston. It is a further advantage that, because of improved piston guide to diameter ratio, piston oscillation can be reduced and piston ring location and movement can be maintained more precisely. Thus, the life and performance of the piston rings can be improved.

It is a further advantage of the invention that only one connecting rod and gudgeon pin bore is required to drive a pair of pistons.

## Claims

1. A reciprocatory machine comprising a pair of opposed pistons (7) rigidly connected to one another by a yoke (3) and mounted so as to reciprocate in respective cylinders (13), and a crank drive (1, 8, 12) connected to the yoke, and in which

the yoke (3) is an open frame structure with four generally parallel limbs (24, 25) perpendicular to the axis of the crank drive shaft (1) and two ends, defining axially spaced openings through which extends the shaft (1) of the crank drive, and two further openings at right angles to the axially spaced openings;

each piston (7) is guided only by the respective cylinder (13); the crank drive comprises the crankshaft (1), a connecting rod (8), and a pin (12) which couples the connecting rod to the yoke (3) and piston assembly; the crank webs of the crankshaft (1) being housed inside the yoke and accommodated by the aforesaid further openings in the yoke; and the crankshaft (1) has bearings (9) at both ends, characterised in that each piston (7) is fastened only to the adjacent end of the yoke (3) and can be detached from the yoke (3); and the gudgeon pin (12) connects the connecting rod (8) only to the yoke (3), whereby both pistons (7) can be detached from the yoke (3) without disturbing the crank drive (1, 8, 12), and the crank drive (1, 8, 12) includes a balance weight (2) on each side of the connecting rod (8) housed inside the yoke and accommodated by the aforesaid further openings in the yoke.

2. A machine according to claim 1 characterised in that the cylinders are over-square.

3. A machine according to claim 1 or 2 characterised in that the yoke (3) includes a detachable bridge piece (24; 26) at one end of the yoke or at one side of the crankshaft.

4. A machine according to any of claims 1 to 3 in which the opposed pistons (7) are substantially coaxial, characterised in that the opposed pistons (7) are of different sizes and operate in cylinders (13) which are interconnected to form a two-stage compressor.

5. A machine according to any preceding claim characterised in that means are provided for ensuring that the pistons are located with high precision on the yoke ends.

## Revendications

1. Machine animée d'un mouvement de va-et-vient, comprenant deux pistons opposés (7) reliés l'un à l'autre de façon rigide par un étrier (3) et montés de manière à effectuer un mouvement de va-et-vient dans les cylindres (13) respectifs, et un entraînement de manivelle (1, 8, 12) relié à l'étrier, et dans laquelle:

l'étrier (3) est constitué par un cadre ouvert à quatre éléments généralement parallèles (24, 25) perpendiculaires à l'axe de l'arbre d'entraînement (1) de la manivelle et à deux extrémités, définissant des ouvertures espacées axialement par lesquelles passe l'arbre d'entraînement (1) de la manivelle; et à deux autres ouvertures à angle droit par rapport aux ouvertures espacées axialement; chaque piston (7) est guideé seulement par le cylindre respectif (13); l'entraînement de la manivelle comprend le vilebrequin (1), une bielle (8) et un axe (12) qui accouple la bielle à l'étrier (3) et à l'ensemble des pistons; les bras de manivelle du vilebrequin sont logés à l'intérieur de l'étrier et reçus dans les autres ouvertures susmentionnées dans l'étrier; et le vilebrequin (1) comprend des paliers (9) à ses deux extrémités, caractérisée en ce que chaque piston (7) est fixé seulement à l'extrémité adjacente de l'étrier (3) et peut être détaché de l'étrier (3); et en ce que l'axe du piston (12) relie la bielle (8) seulement à l'étrier (3), ce grâce à quoi les deux pistons (7) peuvent être détachés de l'étrier (3) sans interférer avec l'entraînement (1, 8, 12) de la manivelle, et en ce que l'entraînement (1, 8, 12) de la manivelle comprend un contrepoids (2) de chaque côté de la bielle (8) logé à l'intérieur de l'étrier et reçu par les autres ouvertures susmentionnées pratiquées dans l'étrier.

2. Machine selon la revendication 1, caractérisée en ce que les cylindres ont un diamètre supérieur à la course des pistons.

3. Machine selon la revendication 1 ou 2, caractérisée en ce que l'étrier (3) comprend une pièce amovible formant pont (24, 26) à l'extrémité de l'étrier ou à une extrémité du vilebrequin.

4. Machine selon l'une quelconque des revendications 1 à 3, dans laquelle les pistons opposés (7) sont sensiblement, coaxiaux, caractérisée en ce que les pistons opposés (7) ont des dimensions différentes et fonctionnent dans des cylindres (13) qui sont interconnectés pour former un compresseur à deux étages.

5. Machine selon l'une quelconque des revendications précédentes, caractérisée en ce que des moyens sont prévus pour assurer le positionnement des pistons avec une grande précision sur les extrémités de l'étrier.

## Patentansprüche

1. Maschine mit hin- und hergehenden Triebwerksteilen und einem Paar einander gegenüberliegenden Kolben (7), die steif miteinander über ein Joch (3) verbunden und so montiert sind, daß sie in entsprechenden Zylindern (13) sich hin- und herbewegen und mit einem, mit dem Joch verbundenen Kurbeltrieb (1, 8, 12), wobei das Joch (3) durch eine Rahmenkonstruktion gebildet ist mit vier im allgemeinen parallelen Gliedern (24, 25), die rechtwinkelig angeordnet sind zur Achse des Kurbeltriebes (1) und mit zwei Seiten, welche axial voneinander distanzierte Offnungen begrenzen, durch welche die Kurbelwelle (1) ragt, und mit zwei weiteren Öffnungen im rechten Winkel zu den axial distanzierten Öffnungen, und jeder Kolben (7) nur durch den entsprechenden Zylinder (13) geführt ist und der Kurbeltrieb eine Kurbelwelle (1), ein Pleuel (8) und einen Zapfen (12) beinhaltet, welcher den Pleuel mit dem Joch (3) und der Kolbenanordnung verbindet und die Kurbelwangen der Kurbelwelle (1) innerhalb des Joches untergebracht und an die vorerwähnten weiteren Öffnungen im Joch angepaßt sind und die Kurbelwelle (1) Lager (9) an beiden Enden aufweist, dadurch gekennzeichnet, daß jeder Kolben (7) ausschließlich mit dem benachbarten Ende des Joches (3) verbunden ist, und vom Joch (3) gelöst werden kann und daß der Kolbenzapfen (12) den Pleuel (8) mit dem Joch (3) verbindet, wobei beide Kolben vom Joch (3) lösbar sind ohne Eingriff in den Kurbeltrieb (1, 8, 12) und der Kurbeltrieb (1, 8, 12) ein Ausgleichsgewicht (2) auf jeder Seite des Pleuels (8) aufweist und jedes Ausgleichsgewicht innerhalb des Joches liegt und den vorerwähnten zusätzlichen Öffnungen im Joch (3) angepaßt ist.

2. Maschine nach Anspruch 1, dadurch gekennzeichnet, daß die Zylinderbohrung größer ist als der Kolbentrieb.

3. Maschine nach Anspruch 1 oder 2, dadurch gekennzeichnet, daß das Joch (3) an einem seiner Enden oder an einer Seite der Kurbelwelle ein lösbares Brückenglied (24, 26) aufweist.

4. Maschine nach einem der Ansprüche 1 bis 3, bei welcher einander gegenüberliegende Kolben (7) im wesentlichen koaxial angeordnet sind, dadurch gekennzeichnet, daß die einander gegenüberliegenden Kolben (7) unterschiedliche Abmessungen aufweisen und in Zylindern (13) laufen, welche zur Bildung eines zweistufigen Kompressors miteinander verbunden sind.

5. Maschine nach einem der vorstehenden Ansprüche, dadurch gekennzeichnet, daß Mittel vorgesehen sind, welche die exakte Lage der Kolben an den Stirnseiten des Joches sicherstellen.

FIG.I.

0 026 633

FIG 2

FIG.3.

FIG.4.

FIG.5.

FIG.6.